# EUROPEAN PATENT SPECIFICATION

(11) **EP 3 975 735 B1**
(45) Date of publication and mention of the grant of the patent: **28.01.2026**
(21) Application number: 20731004.6
(22) Date of filing: 28.05.2020
(51) Int. Cl.: A23G 3/34, A23G 3/36, A23G 3/42, A23G 3/44, A23G 3/46, A23G 3/48, A23G 3/54, A23L 7/122, A23L 33/20, A23P 10/20, A23G 1/40, A23G 1/46, A23G 1/48, A23G 1/54

(54) **CONFECTIONERY COMPOSITION**
SÜSSWARENZUSAMMENSETZUNG
COMPOSITION DE CONFISERIE

(30) Priority: 31.05.2019 GB 201907749
(43) Date of publication of application: 06.04.2022
(73) Proprietor: Kraft Foods Schweiz Holding GmbH, 6300 Zug (CH)
(72) Inventor: DUSSOL, Jean-Maurice, Deerfield, Illinois 60015 (US); CLOS, Michael, Deerfield, Illinois 60015 (US)
(74) Representative: HGF
(86) International application number: PCT/EP2020/064855
(87) International publication number: WO 2020/239917

(56) References cited:
- EP-A1- 1 774 856
- EP-A1- 1 839 496
- EP-A1- 2 452 569
- EP-A2- 1 443 829
- US-A- 5 958 503
- US-A1- 2004 228 951
- US-A1- 2005 118 323
- US-A1- 2006 068 062

## Description

The invention relates to a confectionery product and to a process for making said confectionery product.

Chocolate is a high sugar and calorie food, and is associated with indulgent treats and snacks. Current food trends are emphasising healthier snacking options, and there is a growing trend for snack products which are lower in sugar, fat and/or calories, as well as providing additional nutrients. Healthier snacks such as nuts and fruit provide far better nutritional options for consumers, but are rarely seen as indulgent by consumers and are often less enjoyable. As such, it is difficult to motivate consumers to choose products which are better for their health, rather than selecting indulgent but unhealthy products. As such, there is significant demand for a product which satisfies both criteria. However, a significant problem is that consumer expectation and experience puts both of these characteristics in conflict. EP 1 839 496 A1 discloses a food bar comprising a protein-containing component comprising, as a unitary matrix, partially hydrolysed dairy protein, partially hydrolysed legume protein, intact dairy protein, intact legume protein, acid casein or edible salt thereof, and moisture-containing binder material.

An object of the present invention is to provide a product which is both seen as indulgent by a consumer, but which also provides improved nutritional properties.

### Summary of invention

According to a first aspect of the invention, there is provided a confectionery product according to claim 1.

The ganache may be a chocolate-flavoured ganache, optionally a dark chocolate-flavoured ganache. The confectionery composition of the second portion enhances the consumer perception of indulgence of the confectionery product.

The ganache may advantageously function to deliver high cacao intensity which can reinforce the overall chocolate taste of the product. Thus, the use of ganache as the second portion helps to provide a product which is perceived as being indulgent by a consumer. As the skilled person will appreciate, ganache is typically a soft substance having strong chocolate/cacao notes which may be used as a glaze, icing or filling. Traditionally ganache is prepared by mixing chocolate and cream, but it may also be made using syrup instead of cream. Methods of preparing ganache will be known to those skilled in the art.

For the purposes of this disclosure, the term % is used to mean percentage by weight.

The confectionery product comprises 55 to 75 wt% of a first portion comprising: 60 to 90 wt% of a nut and optionally fruit composition and 10 to 40 wt% of a binder; 5 to 25 wt% of a second portion comprising a ganache; and 10 to 20 wt% of a third portion comprising a chocolate composition.

Nut and optionally fruit compositions enhance the consumer perception of healthiness of the confectionery product.

The nut and optionally fruit composition may further comprises one or more of: nut pastes, whole and/or partial fruits, whole and/or partial dried fruits, fruit pastes, optionally wherein the fruit and/or nut composition further comprises one or more of seeds, legumes, baked and/or unbaked cereals and grains, herbs and spices.

For the purposes of this disclosure, peanuts and coconut are considered a nut.

Examples of suitable nuts include: almonds, peanuts, macadamia nuts, hazelnuts, coconut, pecans, walnuts, pistachios, cashews, and brazil nuts. In some embodiments the nuts are roasted. The fruit and/or nut composition may comprise a single type of nut, or a mixture of two, three or more types of nuts. For example, the fruit and/or nut composition may comprise almonds, hazelnuts, peanuts, or any combination thereof. Examples of suitable legumes include: chickpeas, peas (e.g. pea crisps), lentils, carob, soybeans and tamarind.

Examples of suitable seeds include: sunflower seeds, poppy seeds, pumpkin seeds, chia seeds, coffee beans and cocoa beans.

Examples of suitable cereals and grains include: oats, barley, corn, wheat, buckwheat, quinoa and puffed rice.

Examples of suitable fruits and dried fruits includes: raisins, sultanas, currants, prunes, dates, grapes, berries including strawberries, cranberries, raspberries, and blueberries, stone fruits including peach, nectarine, plum, lychee, mango, apricot and cherries, apple, pear, banana or any other suitable fruit. The fruits may be whole or in pieces. The fruits may be fresh, dried and/or in paste form. For example, some fruits/fruit pieces may be dried while others may be fresh or in the form of a paste.

In some embodiments, the nut and optionally fruit composition comprises almonds and peanuts.

In a further embodiment, the nut and optionally fruit composition comprises almonds, peanuts and a dried fruit, such as dried cranberries.

The nut and optionally fruit composition may further comprise one or more additional ingredients, such as protein-based products (e.g. whey crisps), cereal crisps, one or more vegetables, and any combination thereof.

The nut and optionally fruit composition may comprise up to 50%, up to 60%, up to 70, up to 80%, up to 90%, or up to 90% or up to 95% nuts and optionally fruit. The remainder of the composition may be binder and, optionally, other ingredients such as cereals, seeds, legumes and/or grains.

The nut and optionally fruit composition may comprise 1% to 90% whole nuts and/or fruits.

Optionally, the nut and optionally fruit composition may comprise 5% to 60%, 10% to 50%, 15% to 35% or 20% to 30% whole nuts or fruits. The inventors have found that having partial or whole nuts and optionally fruit when visible, improves the perception of healthiness of the confectionery product.

In some embodiments, the nut and optionally fruit composition comprises 10 to 30% whole nuts.

The nut and optionally fruit composition may comprise 60 to 90% partial nuts (e.g. chopped nuts).

In some embodiments, the nut and optionally fruit composition comprises a mixture of whole nuts and partial nuts.

The nut and optionally fruit composition may comprise 0 to 10% cereals and grains (e.g. 2 to 8% or 3 to 5%).

In some embodiments, the nut and optionally fruit composition comprises almonds and peanuts.

The nut and optionally fruit composition may comprise 16 to 26% roasted whole almonds, 30 to 40% roasted chopped almonds, 33 to 43% roasted peanuts, and 1 to 11% whey crisps. For example, the nut and optionally fruit composition may comprise 21% roasted whole almonds, 35% roasted chopped almonds, 38% roasted peanuts, and 6% whey crisps.

In some embodiments, the nut and optionally fruit composition comprises 10 to 30% whole nuts, 40 to 80% partial nuts (e.g. chopped nuts), and optionally 1 to 20 % fruits and dried fruits (e.g. whole, partial and/or pastes), and 0 to 10% cereals and grains.

In some embodiments, the nut and optionally fruit composition comprises 16 to 26% roasted whole almonds, 38 to 48% roasted chopped almonds, 15 to 25% roasted peanuts, 5 to 15% dried cranberries and 1 to 11% whey crisps. For example, the nut and optionally fruit composition may comprise 21% roasted whole almonds, 43% roasted chopped almonds, 20% roasted peanuts, 10% dried cranberries and 6% whey crisps.

The confectionery product may comprise at least 20 to 90% of the nut and optionally fruit composition. The confectionery product may comprise 30 to 80%, at least 40 to 70% or 50 to 60% of the nut and optionally fruit composition.

It will be appreciated that the amount of binder must be sufficient to hold the ingredients of the first portion together, and can be adjusted by the skilled person as needed. The first portion may comprise 5 to 50% of the binder. Optionally, the first portion may comprise 10 to 40%, 20 to 30%, 20 to 25%, 21 to 23% or 22% of the binder. The binder may comprise a syrup (such as sugar syrup), toffee or caramel. The binder may comprise one or more of: sugars, honey, sugar alcohols, intense sweeteners, and combinations thereof.

Suitable binders will be known to those skilled in the art. A typical binder may comprise about 70% syrup (e.g. glucose syrup), about 24% honey, about 5% sugar and about 1% emulsifier.

Examples of suitable sugars include glucose, dextrose, glucose syrup solids, fructose, lactose, maltose, invert sugar syrup and any combination thereof. The sugar alcohols for example may include erythritol, maltitol, isomalt, mannitol, xylitol, sorbitol and other polyols. Intense sweeteners may include aspartame, acesulfame-k, cyclamates, saccharin, sucralose, neohesperidin, dihydrochalone, alitame, stevia sweeteners, glycyrrhizin or combinations thereof.

In some embodiments, the binder comprises oligofructose, honey, glucose syrup and invert sugar syrup.

The binder may further comprise one or more of: flavourings, flavour enhancers, salt, preservatives, stabilisers, and emulsifiers.

Examples of suitable flavourings include: cocoa powder; cocoa liquor, vanilla extract, mint flavouring, fruit flavouring (e.g. orange flavouring), and chocolate.

Examples of suitable emulsifiers include: lecithin (e.g. soy lecithin).

The confectionery product may comprise at least 5wt% of the binder. The confectionery product may comprise at least 10wt%, 12wt% or at least 14wt% of the binder.

The confectionery composition of the second portion may comprise one or more of: white, milk or dark chocolate, cocoa powder or cocoa liquor. The confectionery composition of the second portion comprises a ganache, which may be a chocolate flavoured ganache, and optionally, a dark chocolate flavoured ganache. The confectionery composition of the second portion may comprise dark chocolate mass and cocoa liquor. The confectionery composition of the second portion enhances the consumer perception of indulgence of the confectionery product. Further beneficially, strong or richly flavoured confectionery compositions can strongly enhance the perception of indulgence. Furthermore, this can be achieved with fewer calories or reduced sugar compared with the required amount of chocolate composition to achieve the same level of indulgence.

The confectionery composition of the second portion may comprise a sweetener. The sweetener may comprise one or more of: sugars, sugar alcohols, intense sweeteners, and combinations thereof. For example, the sugars may comprise glucose, dextrose, glucose syrup solids, fructose, lactose, maltose, invert sugar syrup and any combination thereof. The sugar alcohols for example may include erythritol, maltitol, isomalt, mannitol, xylitol, sorbitol and other polyols. Intense sweeteners may include aspartame, acesulfame-k, cyclamates, saccharin, sucralose, neohesperidin, dihydrochalone, alitame, stevia sweeteners, glycyrrhizin or combinations thereof.

In some embodiments, the sweetener may comprise glucose syrup and invert sugar syrup.

The confectionery composition of the second portion may comprise a lipid. Suitable lipids include cocoa butter, cocoa butter substitute or cocoa butter equivalent, or a milk fat.

The confectionery composition of the second portion may comprise an additional ingredient such as an emulsifier and/or a stabiliser. The emulsifier may comprise lecithin, such as soy lecithin.

The chocolate composition may comprise one or more of white, milk or dark chocolate, couverture or compound chocolate. In some embodiments the chocolate composition is a milk chocolate. Chocolate compositions enhance the perception of indulgence of the confectionery product.

In some embodiments, the chocolate composition comprises a Cocoa Butter Equivalent (CBE). CBEs are defined in Directive 2000/36/EC. Suitable CBEs include illipe, Borneo tallow, tengkawang, palm oil, sal, shea, kokum gurgi and mango kernel.

In some embodiments, the composition comprises a Cocoa Butter Substitute (CBS). Suitable CBSs include CBS laurics and CBS non-laurics. CBS laurics are short-chain fatty acid glycerides. Their physical properties vary within the group but they all have triglyceride configurations that make them compatible with cocoa butter. Suitable CBS laurics include those based on palm kernel oil and coconut oil. CBS non-laurics consist of fractions obtained from hydrogenated oils. The oils are selectively hydrogenated with the formation of trans acids, which increases the solid phase of the fat. Suitable sources for CBS non-laurics include soya, cottonseed, peanut, rapeseed and corn (maize) oil.

According to the invention, each of the first and second portions forms a discrete a layer of the confectionery product. Preferably the portions are approximately planar. According to the invention, the third portion forms a discrete layer of the confectionery product.

Optionally, the third portion forms a full or partial coating of the first and/or second portions. The coating may be formed by enrobing. In embodiments with a partial coating, the coating may cover the second portion. In some embodiments, the third portion forms a half-shoulder enrobing of the product. For example, the third portion may form a base of the confectionery product and may extend at least partially up the sides of the first and/or second portions. Embodiments wherein the third portion forms a base are desirable, since the chocolate composition of the third portion may provide a consumer's initial taste of the product. This may enhance the perception of indulgence of the product.

According to the invention, each of the first, second, and third portions form a layer, such that the product comprises three layers. The second portion is located between the first and third portions. The third portion may be formed by the partial coating or enrobing of the first and second layers. Preferably, the second portion is not visible through the first or third layers and/or the second portion is obscured by the first and third portions. For example, a consumer is unable to view the second portion from the outside until the confectionery product has been cut up or a bite taken thereof.

According to the invention, the first portion forms an upper layer of the confectionery product and is uncoated, or comprises an uncoated region, so that at least a part of the nut and optionally fruit composition is visible to a consumer.

This is desirable since it enhances the perception of 'healthiness' of the confectionery product.

The confectionery product may comprise at least 20 wt% of nuts. In some embodiments, the confectionery product comprises at least 25%, 30%, 35%, 45% or 50% nuts. In some embodiments, the confectionery product comprises no more than 70%, no more than 60% or no more than 50% nuts.

The confectionery product may comprise from 1 to 10 wt% fruit or dried fruit. In some embodiments, the confectionery product comprises from 2 to 8 wt%, from 4 to 6 wt% or 5 wt% fruit or dried fruit.

The confectionery product may comprise less than 40g sugar per 100g of product. In some embodiments, the confectionery product comprises less than 35g, 30g, 28g, 26g, 24g, 22g or 20g of sugar per 100g. In some embodiments, the confectionery product comprises no more than 15g, no more than 12g or no more than 10g sugar over 100g of product. Low sugar products may be achieved by, for example, substituting some or all of the glucose with a sugar replacer such as inuline or polyol.

The confectionery product may comprise less than 20g of saturated fat per 100g. In some embodiments, the confectionery product comprises less than 15g, 12g, 10g, 9g, or 8g of saturated fat per 100g.

According to a second aspect of the invention, there is provided a process for making a confectionery product according to claim 9.

According to the invention, the first and second portions are layers. Optionally, applying the chocolate composition may comprise fully or partially coating the intermediate. The intermediate may be fully or partially coated by enrobing. In some embodiments, partially enrobing or coating the intermediate comprises forming a half-shoulder enrobing, wherein the chocolate composition extends (completely) across one face and at least partially up some or all of the sides of the intermediate.

In some embodiments, the step of forming the first portion comprises using a first sheeter or roller to form a first layer. As will be known to those skilled in the art, a "sheeter" is a piece of equipment composed of one or two motorised rollers, with guides and/or knives configured to layer a sheet of material on a belt.

The first layer may have a thickness in the range of from 5mm to 25mm. In some embodiments, the first layer has a thickness of from 9 to 19mm, from 11 to 17mm, from 13 to 15mm, or 14mm.

In some embodiments, the step of forming the second portion comprises using a second sheeter and/or roller to form a second layer.

The second layer may have a thickness in the range of from 0.5 to 1.5mm. In some embodiments the second layer has a thickness of from 0.7 to 1.2 mm, or from 0.8 to 1.0 mm.

In one series of embodiments, the process comprises forming the second portion first. Combining the first and second portions may comprise forming the first portion directly on the second portion. In such embodiments, it is thus important that the second portion is suitably viscous that it is not damaged by the formation of the first portion thereon. In such embodiments, the first and second sheeters and/or rollers may be configured in series.

In one series of embodiments, the first and second portions are formed separately. Combining the first and second portions may thus comprise positioning one of the first and second portions on top of the other of the first and second portions. lin such embodiments, the first and second sheeters and/or rollers may be configured in parallel.

Optionally, the process may comprise cutting or dividing the layered intermediate into product portions prior to applying the chocolate composition.

As used herein, upper and lower limits from these ranges may be combinable. The first and second aspects of the invention, and their features may be combinable in any manner.

It will be appreciated that any of the embodiments described herein may be combined with each other and with the first or second aspects of the invention, unless otherwise stated.

### Brief Description of the Figures

Embodiments of the invention will now be described by way of example and with reference to the accompanying figures in which:
Figure 1 shows a series of confectionery products;
Figure 2 is a graph showing the results of a consumer test; and

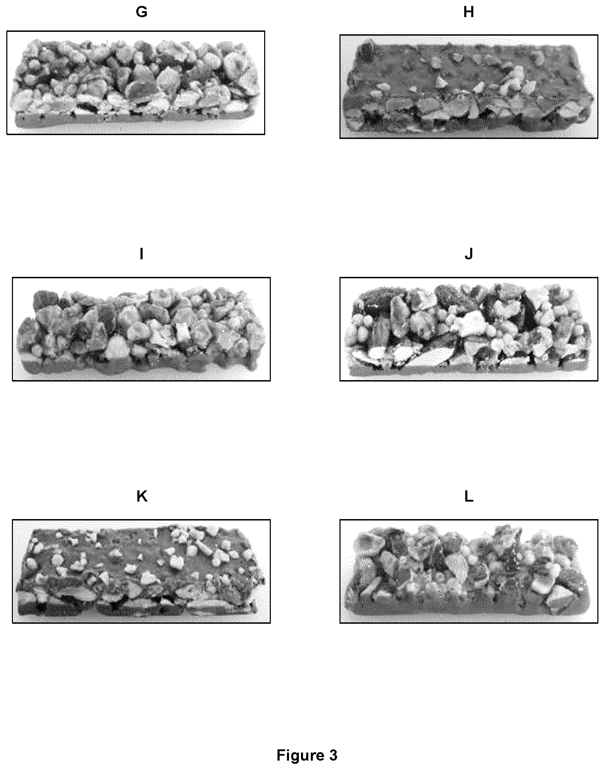

Figure 3 shows a further series of confectionery products.

### Example 1

A confectionery product was prepared according to the following method.

A chocolate flavoured filling, in particular a dark chocolate ganache, was prepared according to the following recipe:

| **Ingredient** | **Wt%** |
|---|---|
| Dark chocolate mass | 19.9% |
| Cocoa Liquor | 14.9% |
| Glucose Syrup | 44.7% |
| Invert Sugar Syrup | 14.9% |
| Anhydrous Milk Fat | 5.0% |
| Salt | 0.4% |
| Soy lecithin | 0.3% |

The ingredients were gently mixed in a Hobart-type mixer at about 40°C. The fat was added first, followed by the emulsifier (lecithin), and then the syrups, chocolate and cocoa were progressively added.

Separately, two fruit and/or nut compositions (Ex 1. and Ex. 2) were formed by mixing 78 wt% of the dry ingredients with 22 wt% of the binder according to the two following recipes:

| **Dry Ingredient (wt%)** | **Ex 1** | **Ex 2** |
|---|---|---|
| Nuts-Almonds-Medium Roasted | 21.0% | 21.0% |
| Chopped roasted almonds 6-9mm | 35.0% | 43.0% |
| Nuts-Peanuts-blanched-Roasted Medium-Halves | 38.0% | 20.0% |
| Protein-Whey-Crisps | 6.0% | 10.0% |
| Crunchy Cranberries | - | 6.0% |

The ganache portion was transported to a first sheeter, having a 30-60 cm diameter roller which was cooled to below 0°C, and formed into a planar sheet of approximately 1mm thickness. The fruit and/or nut compositions were transported to a second sheeter arranged in series and downstream of the first. The fruit and/or nut compositions were formed into a second layer directly on top of the ganache portion to provide two different intermediate products of approximately 14mm thickness. The intermediate products were cooled for 15-25 minutes as they travelled through a temperature gradient from about 9 to about -5°C, and then cut into strips approximately 29mm wide. Lastly, the intermediate products were enrobed with a conventional milk chocolate composition to provide a half-shoulder enrobing and thus form a third layer which extended across a face and up the sides of the intermediate products. The ganache portion was thus obscured between the fruit and/or nut composition and the chocolate enrobing. The chocolate composition was allowed to cool and the strips were cut to a length of approximately 100-110mm to form the finished products with a weight of approximately 40g.

Two final confectionery products were produced comprising fruit and/or nut compositions according to either Ex 1 or Ex 2, thereby forming Example Product 1 (EP1) and Example Product 2 (EP2) respectively. EP1 and EP2 had the following proportions:

| **Portion** | **Proportion of final product (wt%)** |
|---|---|
| Fruit and/or nut composition (Ex 1 or Ex 2) | 65% |
| Chocolate flavoured filling | 15% |
| Chocolate composition enrobing | 20% |

The final confectionery products had the following nutritional properties per 100 g:

| | **EP 1** | **EP 2** |
|---|---|---|
| Kcal | 507 | 491 |
| KJoules | 2047 | 1977 |
| Fat | 33 | 31 |
| Saturated | 8 | 8 |
| Carbs | 31 | 35 |
| Sugar | 23 | 26 |
| Sodium | 0 | 0 |
| Protein | 16 | 14 |
| Fibre | 12 | 12 |

### Example 2

The example products EP 1 and EP 2 were compared against existing confectionery products. Comparative products 1 to 3 are commercially available confectionery products. These products are typically perceived as indulgent treats by consumers. The nutritional data is set out in the table below:

| | **Comp 1** | **Comp 2** | **Comp 3** | **EP 1** | **EP 2** |
|---|---|---|---|---|---|
| Energy, kcal per 100g | 430 | 445 | 479 | 507 | 491 |
| Fat, g | 15.5 | 17 | 23 | 33 | 31 |
| of with sat fat, g | 8.1 | 8.9 | 9.8 | 8 | 8 |
| Carbohydrates, g | 65 | 64.5 | 60 | 31 | 35 |
| of which sugar, g | 41.5 | 37.5 | 45 | **23** | **26** |
| Fibre, g | 4.5 | 4.8 | 2.5 | 12 | 12 |
| Protein, g | 5.4 | 6.1 | 7.3 | 16 | 14 |
| Salt, g | 0.57 | 0.63 | 0.45 | 0 | 0 |

EP1 and EP2 were found to provide similar consumer enjoyment to the comparative products 1 to 3. It was also noted that both EP 1 and EP2 had similar calorific characteristics as the comparative products, but had significantly lower levels of sugar. Similarly, EP 1 and EP2 both had higher levels of unsaturated 'healthy' fats, due to the increased nut content of the confectionery products.

EP1 and EP 2 were then compared with other commercially available products that are perceived as "healthy living" snacking products. Comparative products 4 and 5 are commercially available snack bar products.

| | **Comp 4** | **Comp 5** | **EP 1** | **EP 2** |
|---|---|---|---|---|
| Energy, kcal per 100g | 493 | 464 | 507 | 491 |
| Fat, g | 37 | 24 | 33 | 31 |
| of with sat fat, g | 8.1 | 9.5 | 8 | 8 |
| Carbohydrates, g | 40 | 45.5 | 31 | 35 |
| of which sugar, g | 14 | 22 | 23 | 26 |
| Fibre, g | 18 | 13 | 12 | 12 |
| Protein, g | 14 | 10.1 | 16 | 14 |
| Salt, g | 0.87 | 0.79 | 0 | 0 |

EP 1 and EP 2 were shown to have comparable sugar and saturated fat content as the commercially available products, and had a similar perception of healthiness with consumers.

### Example 3

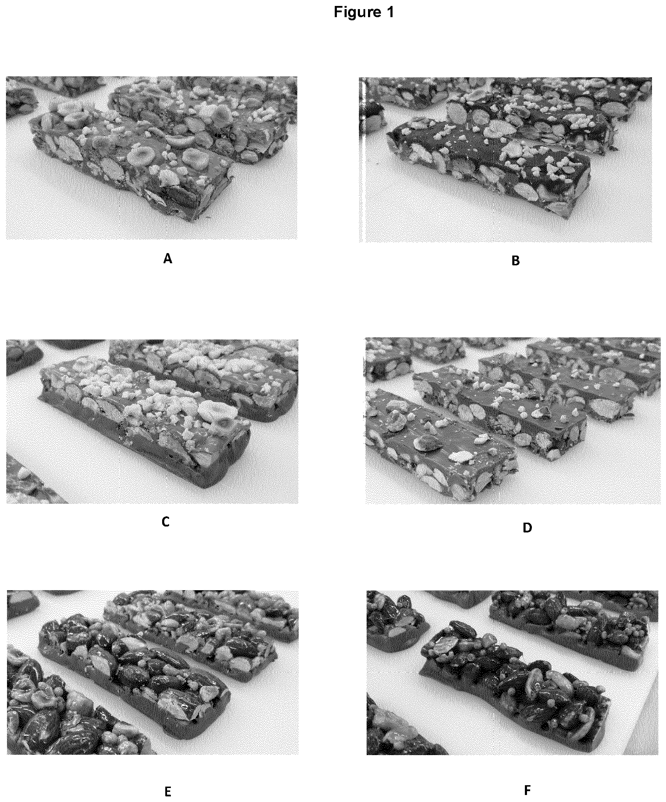

During the development process, the inventors tested 6 different prototype products, A to E, as shown in Figure 1. The compositions are set out in the table below in percentage by weight (wt%) of the final prototype product. Products A-D, F are not according to the present invention.

| | |
|---|---|
| A | Milk chocolate 36.4%; |
| | Nut mix and decoration comprising whole roasted almonds 21.7%, peanuts 19.7%, binder 11.9% (comprising inuline, honey, glucose syrup, flavourings and additives), rice/corn crisp 2.7%; and |
| | Praline comprising chocolate mass 6.4%, roasted hazelnut 5.3%, whole roasted almond 2.3%. |
| B | Milk chocolate 25%; |
| | Nut mix and decoration comprising whole roasted almonds 35.8%, chopped hazelnuts 10.7%, binder 11% (comprising inuline, honey, glucose syrup, flavourings and additives), rice/corn crisp 2.5%; and |
| | Ganache comprising dark chocolate (70% cacao) 6.9%, Invert sugar syrup 6.0%, milk fat <1%, water <1%. |
| C | Milk chocolate 25%; |
| | Nut mix and decoration comprising whole roasted almonds 35.8%, chopped hazelnuts 10.7%, binder 11% (comprising inuline, honey, glucose syrup, flavourings and additives), rice/corn crisp 2.5%; and |
| | Milk chocolate caramel comprising invert sugar syrup 7.1%, white chocolate mass 6%, milk chocolate <1%, milk fat <1%, water <1%. |
| D | Milk chocolate 35%; |
| | Nut mix and decoration comprising whole roasted almonds 38.4%, chopped hazelnuts 11.8%, binder 12.1% (comprising inuline, honey, glucose syrup, flavourings and additives), rice/corn crisp 2.8%. |
| E | Milk chocolate 20%; |
| | Nuts mix comprising whole roasted almonds 23.7%, peanuts 23.7%, binder 14.3% (comprising inuline, honey, glucose syrup, flavourings and additives), rice/corn crisp 3.3%; and |
| | Ganache comprising dark chocolate (70% cacao) 6.9%, Invert sugar syrup 6.0%, milk fat <1%, water <1%. |
| F | Milk chocolate 32%; |
| | Nuts mix comprising whole roasted almonds 14%, peanuts 14%, binder 8.8% (comprising inuline, honey, glucose syrup, flavourings and additives), rice/corn crisp 1.9%; and |
| | Confectionery rope comprising binder 8.8%, rice/corn crisp 3.2%. |

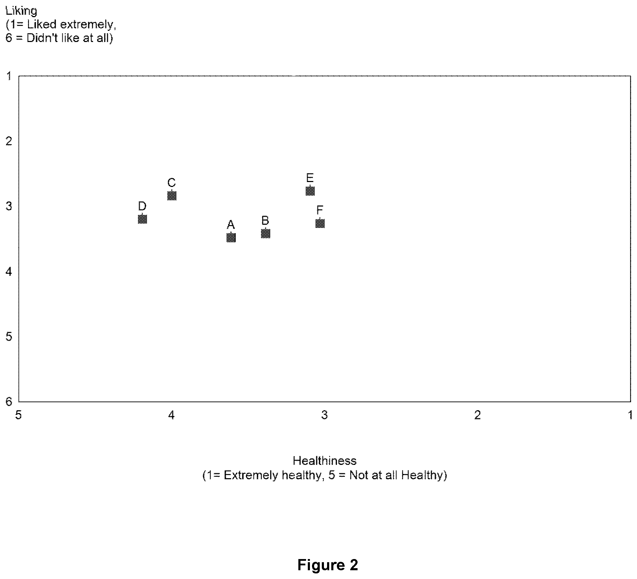

A panel of 32 consumers was then asked to compare the 6 prototypes A to F and score them from 1 to 5 according to their liking of the product and their perception of its healthiness. The results are plotted in the graph in Figure 2. The results showed that protoype E, comprising a ganache layer, was the preferred option with the consumers and had the second highest score for healthiness. Products E and F had the highest scores for perceived healthiness, due in part to a high proportion of visible whole nuts. Prototype E was then referred for further development.

### Example 4

The inventors then carried out a further series of tests with the compositions as set out in the table below. Products H, I, K, L are not according to the present invention.

| | |
|---|---|
| G | Ganache 1: Hidden ganache layer with visible nut layer of chopped almonds, chopped hazelnuts and crispies |
| H | Praline 1 - praline upper layer (50% nut butter; 50% milk chocolate) of approx. 1-2 mm thick on top of a nut layer comprising almonds and 10% crispies (milder nut taste) |
| I | Base of mixed nuts (chopped almonds and chopped hazelnuts) with caramel rope in the centre |
| J | Ganache 2 - Hidden ganache layer with visible nut layer of almonds (50% whole; 50% chopped), chopped hazelnuts and crispies |
| K | Praline 2 - praline upper layer (50% nut butter; 50% milk chocolate) of approx. 1-2 mm thick on top of a nut layer comprising almonds, hazelnuts and 6% crispies (stronger nut taste) |
| L | G or J nut layer with no Ganache |

This trial was devised in order to identify the drivers of consumer liking. For example: L was compared against G to determine the effect of ganache on consumer perception; G was compared against J to determine the impact of almond size on the eating experience (i.e. how hard is it to chew); and H was compared against K to determine the flavour profile preference between almond and a mix of almond and hazelnuts.

Prototypes G and J comprised a chocolate ganache layer positioned between a first layer of a fruit and nut composition and a chocolate composition.

A panel of 50 consumers was then asked to compare the 6 prototypes G to L and score them from 1 to 9 on a range of criteria. Prototypes G and J comprising the ganache layer performed the best with the highest scores for being liked as well as having a healthy perception. Products containing a praline performed the least well. Prototype I was polarising - while it was largely popular with the consumers it was not perceived as healthy or being "better for you" than the alternative products, which was also supported by the nutritional data for this product which comprises 30% sugar. Prototype L was substantially the same as prototypes G and J, but without the ganache layer. Prototype L was found to perform more weakly than either G or J. The panel were then asked to score the prototypes on their appeal.

| | Appearance appeal | Flavour appeal | Texture appeal |
|---|---|---|---|
| G | 7.1 | 6.6 | 6.5 |
| H | 5.0 | 6.1 | 5.5 |
| I | 6.4 | 6.8 | 6.2 |
| J | 7.0 | 6.2 | 6.1 |
| K | 5.2 | 5.7 | 5.5 |
| L | 6.2 | 6.0 | 5.6 |

The results show that prototypes G and J, with high proportions of visible nuts and low proportions of visible chocolate had the highest visual appeal. In comparison, prototype H, comprising a layer of chocolate praline on the upper surface, had the lowest score for appearance. G and J, with the ganache layer, scored better than L, without ganache, for flavour. Both G and J scored highly for texture, with G (chopped nuts) being slightly preferred over J (chopped and whole nuts). The praline-containing products (H and K) again scored the lowest for texture.

The examples show that the inclusion of a ganache layer improves the flavour and overall appeal of the product, while an upper, visible layer of nuts provides an appearance which appeals to consumers and contributes to the product being perceived as healthy. Furthermore, a product that combines a visible nut layer, a ganache layer and chocolate enrobing has been found to have comparable levels of sugar and saturated fat as existing snack bars which are associated with healthy living.

## Claims

1. A confectionery product comprising:
55 to 75 wt% of a first portion comprising:
60 to 90 wt% of a nut and optionally fruit composition and 10 to 40 wt% of a binder;
5 to 25 wt% of a second portion comprising a ganache; and
10 to 20 wt% of a third portion comprising a chocolate composition,
wherein each of the first, second and third portions forms a discrete layer of the confectionery product, and the second portion is located between the first portion and the third portion,
wherein the nut and optionally fruit composition comprises whole and/or partial nuts, and
wherein the first portion forms an upper layer of the confectionery product, the first portion being uncoated or comprising an uncoated region such that at least a part of the nut and optionally fruit composition is visible to a consumer.

2. The confectionery product according to claim 1, wherein the ganache is a dark chocolate flavoured ganache.

3. The confectionery product according to any one of the preceding claims, wherein the nut and optionally fruit composition further comprises one or more of: nut pastes, whole and/or partial fruits, whole and/or partial dried fruits, fruit pastes, optionally wherein the nut and optionally fruit composition further comprises one or more of seeds, legumes, baked and/or unbaked cereals and grains, herbs and spices.

4. The confectionery product according to any one of the preceding claims, wherein the nut and optionally fruit composition comprises almonds and peanuts, and optionally, dried cranberries.

5. The confectionery product according to any one of the preceding claims, wherein the binder is a syrup, toffee or caramel.

6. The confectionery product according to claim 5, wherein the binder is a syrup and comprises oligofructose, honey, glucose syrup and invert sugar syrup.

7. The confectionery product according to any one of the preceding claims, wherein the chocolate composition of the third portion comprises one or more of white chocolate, milk chocolate, dark chocolate, couverture and compound chocolate.

8. The confectionery product according to any one of the preceding claims, wherein the third portion forms a half shoulder enrobing of the confectionery product.

9. A process for making a confectionery product according to any one of the preceding claims, the process comprising:
forming the first portion comprising a nut and optionally fruit, and a binder;
forming the second portion comprising a ganache;
combining the first and second portions to form an intermediate; and
applying the chocolate composition to the intermediate to form a third portion, wherein the first and second portions are formed as layers, and optionally, wherein applying the chocolate composition comprises partially coating the intermediate.

## Patentansprüche

1. Süßwarenprodukt, umfassend:
55 bis 75 Gew.-% eines ersten Abschnitts, der Folgendes umfasst:
60 bis 90 Gew.-% einer Nuss- und optional Fruchtzusammensetzung und 10 bis 40 Gew.-% eines Bindemittels;
5 bis 25 Gew.-% eines zweiten Abschnitts, der eine Ganache umfasst; und
10 bis 20 Gew.-% eines dritten Abschnitts, der eine Schokoladenzusammensetzung umfasst,
wobei jeder von dem ersten, zweiten und dritten Abschnitt eine diskrete Schicht des Süßwarenprodukts bildet und sich der zweite Abschnitt zwischen dem ersten Abschnitt und dem dritten Abschnitt befindet, wobei die Nuss- und optional Fruchtzusammensetzung ganze und/oder geteilte Nüsse umfasst, und
wobei der erste Abschnitt eine obere Schicht des Süßwarenprodukts bildet, der erste Abschnitt unbeschichtet ist oder einen unbeschichteten Bereich umfasst, sodass zumindest ein Teil der Nuss- und optional Fruchtzusammensetzung für einen Verbraucher sichtbar ist.

2. Süßwarenprodukt nach Anspruch 1, wobei die Ganache eine mit dunkler Schokolade gewürzte Ganache ist.

3. Süßwarenprodukt nach einem der vorhergehenden Ansprüche, wobei die Nuss- und optional Fruchtzusammensetzung ferner eines oder mehrere der folgenden umfasst: Nusspasten, ganze und/oder geteilte Früchte, ganze und/oder geteilte Trockenfrüchte, Fruchtpasten, optional wobei die Nuss- und optional Fruchtzusammensetzung ferner eines oder mehrere von Samen, Hülsenfrüchten, gebackenen und/oder ungebackenen Zerealien und Körnern, Kräutern und Gewürzen umfasst.

4. Süßwarenprodukt nach einem der vorhergehenden Ansprüche, wobei die Nuss- und optional Fruchtzusammensetzung Mandeln und Erdnüsse, und optional, getrocknete Preiselbeeren umfasst.

5. Süßwarenprodukt nach einem der vorhergehenden Ansprüche, wobei das Bindemittel ein Sirup, Toffee oder Karamell ist.

6. Süßwarenprodukt nach Anspruch 5, wobei das Bindemittel ein Sirup ist und Oligofruktose, Honig, Glukosesirup und Invertzuckersirup umfasst.

7. Süßwarenprodukt nach einem der vorhergehenden Ansprüche, wobei die Schokoladenzusammensetzung des dritten Abschnitts eines oder mehrere von weißer Schokolade, Milchschokolade, dunkler Schokolade, Kuvertüre und Blockschokolade umfasst.

8. Süßwarenprodukt nach einem der vorhergehenden Ansprüche, wobei der dritte Abschnitt einen teilweisen Überzug des Süßwarenprodukts bildet.

9. Verfahren zum Herstellen eines Süßwarenprodukts nach einem der vorhergehenden Ansprüche, wobei das Verfahren Folgendes umfasst:
Bilden des ersten Abschnitts, der eine Nuss und optional Frucht, und ein Bindemittel umfasst;
Bilden des zweiten Abschnitts, der eine Ganache umfasst;
Kombinieren des ersten und des zweiten Abschnitts, um ein Zwischenprodukt zu bilden; und
Auftragen der Schokoladenzusammensetzung auf das Zwischenprodukt, um einen dritten Abschnitt zu bilden, wobei der erste und der zweite Abschnitt als Schichten gebildet sind, und optional, wobei das Auftragen der Schokoladenzusammensetzung teilweises Beschichten des Zwischenprodukts umfasst.

## Revendications

1. Produit de confiserie, comprenant :
55 à 75 % en poids d'une première portion comprenant :
60 à 90 % en poids d'une composition de noix et éventuellement de fruit et 10 à 40 % en poids d'un liant ;
5 à 25 % en poids d'une deuxième portion comprenant une ganache ; et
10 à 20 % en poids d'une troisième portion comprenant une composition de chocolat, dans lequel chacune des première, deuxième et troisième portions forme une couche distincte du produit de confiserie, et la deuxième portion est située entre la première portion et la troisième portion,
dans lequel la composition de noix et éventuellement de fruit comprend des noix entières et/ou en morceaux, et
dans lequel la première portion forme une couche supérieure du produit de confiserie, la première portion étant non enrobée ou comprenant une zone non enrobée de sorte qu'au moins une partie de la composition de noix et éventuellement de fruit soit visible pour un consommateur.

2. Produit de confiserie selon la revendication 1, dans lequel la ganache est une ganache au chocolat noir.

3. Produit de confiserie selon l'une quelconque des revendications précédentes, dans lequel ladite composition de noix et éventuellement de fruit comprend en outre un ou plusieurs parmi : des pâtes de noix, des fruits entiers et/ou en morceaux, des fruits secs entiers et/ou en morceaux, des pâtes de fruits, éventuellement dans lequel la composition de noix et éventuellement de fruit comprend en outre un ou plusieurs parmi des graines, légumineuses, céréales et grains cuits et/ou non cuits, herbes et épices.

4. Produit de confiserie selon l'une quelconque des revendications précédentes, dans lequel ladite composition de noix et éventuellement de fruit comprend des amandes et des arachides, et éventuellement, des canneberges séchées.

5. Produit de confiserie selon l'une quelconque des revendications précédentes, dans lequel le liant est un sirop, un caramel anglais ou un caramel.

6. Produit de confiserie selon la revendication 5, dans lequel le liant est un sirop et comprend de l'oligofructose, du miel, du sirop de glucose et du sirop de sucre inverti.

7. Produit de confiserie selon l'une quelconque des revendications précédentes, dans lequel la composition de chocolat de la troisième portion comprend un ou plusieurs parmi le chocolat blanc, le chocolat au lait, le chocolat noir, le chocolat de couverture et le chocolat composé.

8. Produit de confiserie selon l'une quelconque des revendications précédentes, dans lequel la troisième portion forme un enrobage de demi-épaule du produit de confiserie.

9. Procédé de fabrication d'un produit de confiserie selon l'une quelconque des revendications précédentes, le procédé comprenant :
la formation de la première portion comprenant une noix et éventuellement du fruit, et un liant ;
la formation de la deuxième portion comprenant une ganache ;
la combinaison des première et deuxième portions pour former un intermédiaire ; et
l'application de la composition de chocolat sur l'intermédiaire pour former une troisième portion, dans lequel les première et deuxième portions sont formées sous forme de couches, et éventuellement, dans lequel l'application de la composition de chocolat comprend l'enrobage partiel de l'intermédiaire.
